# EUROPÄISCHE PATENTSCHRIFT

(11) **EP 1 259 010 B1**
(45) Veröffentlichungstag und Bekanntmachung des Hinweises auf die Patenterteilung: **01.07.2009**
(21) Anmeldenummer: 01112135.7
(22) Anmeldetag: 17.05.2001
(51) Int. Cl.: H04B 7/26, H04L 27/26

(54) **Verfahren und Vorrichtung zum Übertragen von Daten in Funkkanälen mit starker Mehrwegeausbreitung in einem Funk-Kommunikationssystem**
Method and device for transferring data in radio links with strong multi-path propagation in a radio communication system
Procédure et dispositif transférer des données dans les canaux radio avec une propagation par trajets multiples dans un système de radiocommunication

(43) Veröffentlichungstag der Anmeldung: 20.11.2002
(73) Patentinhaber: SIEMENS AKTIENGESELLSCHAFT, 80333 München (DE)
(72) Erfinder: Eichinger, Josef, 85464 Finsing (DE); Lott, Matthias, 81477 München (DE); Zirwas, Wolfgang, 82194 Gröbenzell (DE)

(56) Entgegenhaltungen:
- EP-A- 0 929 172
- WO-A-99/65180
- US-A- 5 652 772
- YANG B ET AL: "BURST FRAME SYNCHRONIZATION FOR OFDM TRANSMISSION IN MULTIPATH FADING LINKS" VTC 1999-FALL. IEEE VTS 50TH. VEHICULAR TECHNOLOGY CONFERENCE. GATEWAY TO THE 21ST. CENTURY COMMUNICATIONS VILLAGE. AMSTERDAM, SEPT. 19 - 22, 1999, IEEE VEHICULAR TECHNOLGY CONFERENCE, NEW YORK, NY: IEEE, US, Bd. 1 CONF. 50, September 1999 (1999-09), Seiten 300-304, XP000929059 ISBN: 0-7803-5436-2

## Beschreibung

Die Erfindung bezieht sich auf ein Verfahren zum Übertragen von Daten in einem Funk-Kommunikationssystem mit den oberbegrifflichen Merkmalen des Patentanspruchs 1 bzw. eine Vorrichtung zum Durchführen eines solchen Verfahrens.

In Funk-Kommunikationssystemen, wie beispielsweise GSM (Global System for Mobil Communication), UMTS (Universal Mobil Telecommunication System) oder HiperLAN bzw. H2 als lokales Datennetz werden Informationen, beispielsweise Sprache, Bildinformationen oder andere Daten, mit Hilfe von elektromagnetischen Wellen über eine Funkschnittstelle zwischen sendender und empfangender Station übertragen. Die über die Funkschnittstelle kommunizierenden Stationen sind zumeist einerseits eine mobile Teilnehmerstation bzw. ein mobiler Computer und andererseits eine netzseitige, ortsfeste Station. Die netzseitige Station leitet Daten zu bzw. von weiteren Netzeinrichtungen weiter, wobei die netzseitigen Einrichtungen entsprechend dem Kommunikationssystem ausgebildet sind.

Bei der derzeitigen Technologie für lokale Funkdatennetze (WLAN: Wireless Local Area Network), H2 ( HiperLAN Typ 2), gibt es derzeit einen ersten Satz Standards, wobei der Schwerpunkt für Anwendungen bei H2 innerhalb von Gebäuden oder Büros mit einer sehr geringen Mobilität bzw. Tragbarkeit der teilnehmerseitigen Stationen gesehen wird. Daher werden Fünf-Kanal-Modelle mit einer maximalen Impulsantwort von weniger als 1 µs spezifiziert. H2 beruht auf einem Multiplex-Verfahren mit orthogonaler Frequenzteilung (OFDM: Orthogonal Frequency Division Multiplex), wobei ein Schutzintervall vor dem eigentlichen Datenintervall bei der Einteilung von Nutzdaten in einen Datenübertragungsblock verwendet wird, um eine Zwischen-Symbol-Interferenz (ISI: Inter Symbol Interference) zwischen benachbarten OFDM-Symbolen zu vermeiden. Die Länge eines solchen Schutzintervalls soll dabei zumindest so lang sein, wie die längste Mehrwegekomponente des Funkkanals. Bei H2 wurde ein Schutzintervall von 800ns spezifiziert, das für typische Büroszenarien ausreichend ist.

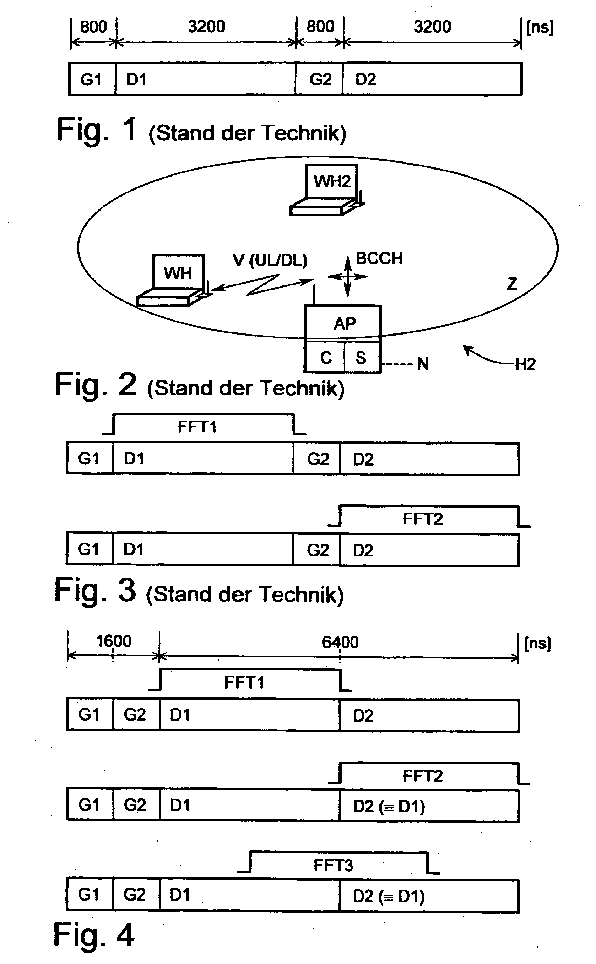

Wie aus Fig. 1 ersichtlich, ist beim derzeitigen H2-Standard eine Datenfolge bzw. ein Datenstrom vorgesehen, bei dem sich Zusatzdaten bzw. Schutzintervalle G1, G2 mit Nutzdaten D1, D2 jeweils abwechseln. Die Länge der Zusatzdaten G1, G2 beträgt vorliegend jeweils 800ns und die Länge der Nutzdaten D1, D2 beträgt jeweils 3200ns.

Mittlerweile wird eine Anzahl neuer Anwendungen für öffentliche oder teilweise öffentliche Verwendungen von H2 diskutiert. Einige dieser Anwendungen machen jedoch auch mobile H2-Terminals mit einer hohen Mobilität erforderlich, beispielsweise für einen Datenaustausch zwischen Fahrzeugen oder für Fahrzeuge, die Ampelanlagen passieren. Beispielsweise werden Messkampagnen geplant, um die Länge der Impulsantworten in solchen Situationen zu bestimmen, wobei bereits erwarten werden kann, dass es Impulsantworten mit einer Dauer länger als 800ns, d.h. in der Größenordnung von 2 µs geben wird. Ohne Gegenmaßnahmen würde H2 aufgrund des kurzen Schutzintervalls von nur 800ns versagen.

Aus einem terrestrischen digitalen Video-Rundfunk (DVB-T: Digital Video Broadcast, Terrestrial) ist es bekannt, die Anzahl von Unterträgern (SCs: Sub Carriers) zu erhöhen, so dass die Länge der OFDM-Symbole vergrößert werden kann. Bei H2 würde eine solche Vorgehensweise sehr weitreichende Änderungen in der physikalischen Ebene erforderlich machen und den Hardware-Aufwand für die Signalverarbeitung erhöhen. Ein anderes Beispiel ist vom WO 99/65180 bekannt.

Eine Aufgabe der Erfindung besteht darin, H2 oder vergleichbare Kommunikationssysteme in mobilen und öffentlichen Umgebungen auch für die Verwendung von größeren Datenmengen in einem Datenübertragungsblock oder bei erhöhter Anwortdauer einsatzfähig zu machen. Bei H2 sollten beispielsweise lange Impulsantworten in der Größenordnung von 1,6 - 2 µs möglich werden. Dabei sollen die Änderungen in der physikalischen Ebene von H2 minimal gehalten werden.

Diese Aufgabe wird durch ein Verfahren zum Übertragen von Daten in einem Funk-Kommunikationssystem mit den Merkmalen des Patentanspruchs 1 bzw. eine Vorrichtung zum Durchführen eines solchen Verfahrens mit den Merkmalen des Patentanspruchs 9 gelöst.

Bei einem Verfahren zum Übertragen von Daten über eine Funkschnittstelle zwischen zwei Stationen eines Kommunikationssystems, bei dem die Daten in einem Datenstrom übertragen werden und im Datenstrom Nutzdatenblöcke nach diesen betreffenden Zusatzdatenblöcken, insbesondere Schutzintervallen, eingesetzt werden, ist es vorteilhaft, im Datenstrom jeweils zumindest zwei Zusatzdatenblöcke als einen Block einzusetzen, bevor die dazu gehörenden Nutzdatenblöcke als ein nachfolgender Block eingesetzt werden. Durch eine solche Vorgehensweise wird einerseits der Bereich für die Zusatzdaten, insbesondere das Schutzintervall, vergrößert und andererseits wird auch der Bereich für Nutzdaten entsprechend der Anzahl zusammengefasster Nutzdatenblöcke vervielfacht.

Vorrichtungen mit entsprechenden Steuer- und Speichereinrichtungen sowie einer geeigneten Softwareausstattung ermöglichen die Umsetzung eines solchen Verfahrens in den mobilen Stationen bzw. den netzseitigen Stationen eines Funk-Kommunikationssystem.

Vorteilhafte Ausgestaltungen sind Gegenstand von abhängigen Ansprüchen.

Bei einer Vielzahl von Kommunikationssystemen werden bei normalem Betrieb jeweils in direkter Abfolge ein Zusatzdatenblock oder Schutzintervall und anschließend der dazugehörende Nutzdatenblock in einem Datenstrom eingesetzt (Fig. 1). Um diese üblichen Betriebsbedingungen optional weiterhin in der bekannten Art und Weise nutzen zu können, wird das vorstehend bezeichnete Verfahren vorteilhafterweise bei speziellen Betriebsanforderungen aktiviert, wobei dann jeweils mehrere Zusatzdatenblöcke bzw. Schutzintervalle als ein Block zusammengefasst in dem Datenstrom eingesetzt werden und erst danach die dazugehörenden Nutzdaten in einem nachfolgenden Datenblock in den Datenstrom eingesetzt werden. Als spezielle Betriebsanforderungen sind dabei beispielsweise eine überlange Antwortzeit, längere Datenfolgen als die Länge eines üblichen Nutzdatenblocks oder höhere Anforderungen an die Übertragungssicherheit festlegbar.

Bei einer Vielzahl von Kommunikationssystemen wird vor der Übertragung von Daten auf die entsprechenden Datenblöcke jeweils eine Fouriertransformation angewendet. Nach dem Empfang wird entsprechend eine Rück-Fouriertransformation angewendet, die teilweise auch einfach als Dekodierung bezeichnet wird.

Gemäß einer besonders bevorzugten Ausführungsform, bei der mehrere Datenblöcke mit gleichem Dateninhalt bzw. gleicher Datenfolge übertragen werden, wird vorteilhafterweise eine weitere Fouriertransformation bei dem Rücktransformieren auf einen überlappenden Bereich dieser Datenblöcke angewendet. Zweckmäßigerweise wird der Überlappungsbereich dabei so gewählt, dass Daten, die in dem ersten Datenblock von zwei Datenblöcken nicht erfasst werden in dem zweiten Datenblock entsprechend erfasst werden. Dadurch können beispielsweise gestörte Tieffrequenzbereiche im ersten Datenblock oder gestörte Hochfrequenzbereiche im zweiten Datenblock gemieden werden. Besonders bevorzugt wird dabei bei benachbarten Nutzdatenblöcken, die dritte Fouriertransformation hälftig über den ersten und hälftig über den zweiten Datenblock anzuwenden.

Zur Fehlerminimierung werden die Ergebnisse der verschiedenen Fouriertransformationen, die auf Datenblöcke gleichen Inhalts angewendet wurden, addiert und optional durch die Anzahl der Ergebnisse von Fouriertransformationen dividiert. Dabei wird ausgenutzt, das bei jedem der übertragenen Datenblöcke ein statistisch anderes Störverhalten überlagert wird. Die Addition der Ergebnisse der Fouriertransformationen entspricht aus mathematischer Sicht einer Mittelung der entsprechenden Störeinflüsse.

Insbesondere bei Systemen, bei denen der normale bzw. herkömmliche Betrieb wechselweise mit einem hier vorgeschlagenen Betrieb bei speziellen Betriebsanforderungen verwendet wird, ist es für die empfangende Station wichtig, zu erfahren, nach welchem Schema die empfangenen Daten verarbeiten werden sollen. Dies kann durch eine entsprechende Signalisierung durch die sendende Station erfolgen.

Zusätzlich oder alternativ ist insbesondere auch der Einsatz eines Verfahrens vorteilhaft, bei dem der Datenstrom empfängerseitig auf eine Abfolge von zwei oder mehr Zusatzdatenblöcken bzw. zwei oder mehr direkt folgenden Schutzintervallen als Abfolge vor einer entsprechenden Abfolge von Nutzdatenblöcken untersucht wird. Bei erkennen einer solchen Situation kann eine entsprechende Verarbeitung eingeleitet werden.

Anstelle den Datenstrom nach entsprechenden Abfolgen von Zusatzdatenblöcken zu untersuchen kann z.B. auch nach entsprechenden Abfolgen von Nutzdatenblöcken gesucht werden.

Dieses Verfahren kann vorteilhafterweise insbesondere dann angewendet werden, wenn die sendende Station keine entsprechende Signalisierung übermittelt, da dadurch auch Situationen gehandhabt werden können, bei der die sendende Station eine entsprechende spezielle Datenfolge lediglich weiterleitet, die sie von einer anderen Einrichtung in dieser Form empfangen hat.

Ein solches Verfahren kann insbesondere in Kombination mit der Verlängerung des Schutzintervalls verwendet werden, wobei dies zu einer verringerten Systemkapazität führen würde. Insbesondere ist eine solche Verlängerung vorliegend vorteilhafterweise optional durch das Zusammenfügen mehrerer Schutzintervalle bzw. Zusatzdaten in einem Block möglich. Vorteilhafterweise kann gegenüber der festen Verlängerung des Schutzintervalls bei beispielsweise dem H2-Standard auf eine entsprechende Anpassung des Standards verzichtet werden bzw. eine solche Anpassung kann mit geringem Aufwand umgesetzt werden, wobei Situationen vermieden werden können, bei denen ein OFDM-Symbol, das aus Schutzintervall und Nutzdatenteil zusammengesetzt ist, nur vier µs beträgt, wobei dann die 800ns Schutzintervall eine Überlast von 25% ausmachen würden.

Ferner kann das vorstehend beschriebene Verfahren auch in Verbindung mit Systemen eingesetzt werden, bei denen mehr oder weniger Zwischen-Symbol-Interferenz (ISI: Inter Symbol Interference) zwischen aufeinanderfolgenden OFDM-Symbolen zugelassen wird und ein Equalizer diese Zwischen-Symbol-Interferenzen in dem Basisband entfernt. Durch eine Kombination mit einem solchen Verfahren würde jedoch der größte Vorteil von OFDM aufgegeben, da dies mit einem hohen Aufwand an Signalverarbeitung in dem Basisstations-Modem verbunden wäre.

Ein Ausführungsbeispiel wird nachfolgend anhand der Zeichnung näher erläutert. Es zeigen:
- Fig. 1: eine Datenfolge gemäß dem Stand der Technik zur Übertragung von Daten in einem Funk-Kommunikationssystem,
- Fig. 2: schematisch Einrichtungen eines FunkKommunikationssystem;
- Fig. 3: einen Datenstrom, auf dessen ersten Datenblock eine erste Fouriertransformation angewendet wird und auf dessen zweiten Datenblock eine zweite Fouriertransformation angewendet wird, und
- Fig. 4: einen Datenstrom gemäß dem vorliegenden Verfahren, wobei in drei Teilabbildungen jeweils Anwendungsbereiche einzelner Fouriertransformationen skizziert sind.

Bei einem beispielhaften Kommunikationssystem, hier einem H2-Funk-Kommunikationssystem als lokales, funkgestütztes Datennetz, wie dies in Fig. 2 skizziert ist, kommuniziert eine Vielzahl verschiedenartigster Einrichtungen miteinander. Als ortsfeste Zugriffsstation dient bei einem solchen Datennetz ein Zugriffspunkt AP, der eine Steuereinrichtung C, eine Speichereinrichtung S und weitere für den Betrieb erforderliche Einrichtungen und Module mit entsprechenden Softwarefunktionen aufweist. Ein Teil dieser Einrichtungen, Module und Softwarefunktionen kann bei einem Datennetz auch in andere Einrichtungen ausgelagert sein, wobei dann eine Verbindung zu weiteren Netzeinrichtungen N besteht.

Der Zugriffspunkt AP baut eine Funkzelle Z auf, wobei insbesondere bei Verwendung von sektorisierten Antennen auch mehrere Funkzellen Z aufgebaut werden können. Innerhalb dieser Funkzelle Z können stationäre oder mobile teilnehmerseitige Stationen WH, WH2 mit dem Zugriffspunkt AP kommunizieren. Einerseits sendet der Zugriffspunkt über Nachrichten- bzw. Rundfunkkanäle BCCH (Broad Cast CHannel) Informationen an die in seiner Funkzelle Z befindlichen Stationen WH, WH2, z.B. mobile funkgestützte Terminals, aus. Andererseits können direkte Verbindungen V zwischen dem Zugriffspunkt AP und einer jeweils einzelnen der Stationen WH aufgebaut werden. Über diese Verbindungen V, die eine direkte Funkschnittstelle ausbilden, werden Daten in Aufwärtsrichtung UL bzw. Abwärtsrichtung DL ausgetauscht. Die Trägerfrequenz der Funkschnittstelle V liegt im Fall von H2 bei 5-6 GHz.

Wie aus Fig. 3 ersichtlich, werden die Daten jeweils senderseitig in einen Datenstrom eingesetzt, wobei bei H2 jeweils ein Schutzintervall G1 und ein Nutzdatenintervall D1 unmittelbar hintereinander in den Datenstrom eingesetzt werden, bevor ein weiteres Schutzintervall G2 mit einem weiteren Nutzdatenblock D2 in den Datenstrom eingesetzt wird. Vor dem Einsetzen der Nutzdaten D1, D2 in den Datenstrom wird auf die Nutzdaten jeweils eine Fouriertransformation (FFT) angewendet. In dem Datenstrom angeordnet werden die Daten dann von der sendenden Station, dass heißt entweder dem Zugriffspunkt AP oder der mobilen Station WH, über die Funkschnittstelle V zu der empfangenden Station, dass heißt umgekehrt entweder der mobilen Station WH bzw. dem Zugriffspunkt AP, übertragen. In dieser empfangenden Station WH bzw. AP werden die empfangenen Daten dann entsprechend mit einer rückwärts gerichteten Fouriertransformation FFT1, FFT2 entschlüsselt bzw. aufbereitet und dann an entsprechende Einrichtungen zur Weiterverarbeitung übergeben.

Gemäß der bevorzugten Ausführungsform werden die Daten bei speziellen Betriebsanforderungen oder optional generell in einer Datenfolge in den Datenstrom eingeordnet, wie dies in Fig. 4 dargestellt ist. Anstelle jeweils einen Nutzdatenblock G1, G2 bzw. hier ein Schutzintervall in direktem Wechsel mit dem zugeordneten Nutzdatenblock D1 bzw. D2 in den Datenstrom einzuordnen, werden je nach Bedarf zwei oder mehr Zusatzdatenblöcke G1 und G2 in direkter Folge in den Datenstrom eingeordnet, bevor die dazu gehörenden Nutzdaten bzw. Nutzdatenblöcke in den Datenstrom eingeordnet werden. Bei H2 würde dies einer Verdoppelung, Verdreifachung usw. des Schutzintervalls und einer Verdoppelung, Verdreifachung usw. des nachfolgenden Nutzdatenblocks entsprechen. Bei dem in Fig. 4 dargestellten Beispiel hätte das Schutzintervall eine Dauer von 1600ns anstelle von 800ns und der Nutzdatenblock hätte eine Dauer von 6400ns anstelle von 3200ns.

Gemäß einem weiteren Aspekt mit eigenständiger erfinderischer Bedeutung kann dabei der Nutzdatenteil zweifach oder vielfach übertragen werden um beispielsweise Kapazitätsverluste oder Störanteile zu minimieren. Im vorliegenden Ausführungsbeispiel würde dies dem Fall entsprechen, in dem die Daten des Nutzdatenblocks D1 den Daten des Nutzdatenblocks D2 entsprechen. Die Daten sind dabei mit einem OFDM-Symbol mit jeweils der selben auf diese angewandten Modulation bearbeitet und in den Datenstrom eingesetzt. Anwendbar ist ein solches Verfahren natürlich auch bei nicht modulierten Daten, wenn jeweils direkt gleiche Daten in die beiden Nutzdatenblöcke oder Datenblöcke eingetragen werden, bevor die Fouriertransformation jeweils auf die entsprechenden Datenblöcke angewendet wird.

Ohne zusätzliche Maßnahmen ist der Kapazitätsverlust sogar größer, als wenn nur ein Nutzdatenteil D1 übertragen werden würde, da der zweite Nutzdatenteil D2 keine zusätzlichen Informationen trägt. Der zweite Nutzdatenblock D2 kann jedoch als ein Wiederholungscode angesehen werden, dass heißt, es wurde eine gewisse Redundanz hinzugefügt. Wenn auf den ersten Nutzdatenblock D1 vor dem Einsetzen in den Datenstrom bzw. vor der Übertragung eine erste Fouriertransformation FFT1 angewendet wird und auf dem den zweiten Nutzdatenblock D2 entsprechend eine zweite Fouriertransformation FFT2 angewendet wird, dann werden die gleichen Daten doppelt übertragen, wobei empfängerseitig eine Addition vorgenommen werden kann. Diese empfängerseitige Addition der empfangenen Daten entspricht einem Verstärkungsgrad der Signalenergie von z.B. 6dB. Da das additive weiße Gauss'sche Rauschen AWGN (Additive White Gaussian Noise) für beide Datenteile bzw. Nutzdatenblöcke D1 und D2 unkorreliert ist, wirkt während der Übertragung aufgenommenes Rauschen (noise) wie geometrisch hinzu addiert, wodurch sich das Rauschen nach der Addition der beiden Fouriertransformierten Nutzdatenblöcke FFT1 und FFT2 um 3 dB erhöht. Die effektive gewonnene gesamte Verstärkung ergibt sich bei dem beispielhaften Wiederholungscode mit Blick auf das Signal/Rausch-Verhältnis S/N daher zu S/N=(6-3)dB=3dB.

Eine weitere Verbesserung des Signal/Rausch-Verhältnisses ist möglich, falls eine dritte Fouriertransformation FFT3 durchgeführt wird, wobei diese hinsichtlich des Startpunktes der Fouriertransformation so verschoben wird, dass sie im ersten Datenblock D1 beginnt und im zweiten Datenblock D2 endet.

Vorteilhafterweise wird der Startpunkt so gewählt, dass er mittig im ersten Nutzdatenblock D1 beginnt und mittig im zweiten Nutzdatenblock D2 endet. In diesem Fall verschiebt sich die Fouriertransformation hinsichtlich der Dauer zugleich auch um eine halbe Symbolperiode des OFDM-Symbols. Während sich die Signale bei einer Addition konstruktiv addieren, wird das Rauschen gemäß dem Theorem des additiven weißen Gauss'schen Rauschens (AWGN) durch fehlende Korrelation wiederum verringern.

Aufgrund der zeitlichen Verschiebung des Startpunktes der dritten Fouriertransformation FFT3 findet eine Phasenverschiebung aller Unterträger statt, wobei diese jedoch bei bekanntem Verschiebungsbeginn leicht abgeschätzt bzw. direkt bestimmt und entsprechend korrigiert werden kann. Bei zuvor fest vorgegebenen Startzeitpunkten für die einzelnen Fouriertransformationen FFT1, FFT2 und FFT3 ist diese Korrektur im voraus bekannt und braucht nicht abgeschätzt zu werden.

Das höhere Signal/Rausch-Verhältnis kann verwendet werden, um eine Übertragung mit einem höheren Modulationsformat oder mit verringerter Übertragungsleistung vorzunehmen. Eine andere Möglichkeit würde in der Erhöhung der Coderate des ursprünglich übertragenen Datensymbols des Nutzdatenblocks D1 bestehen. Auch dies ist möglich, da die Wiederholung des Codes Redundanz hinzufügt, die für eine vorwärts gerichtete Fehlerkorrektur FEC verwendet werden kann.

Eine weitere Verbesserung ist möglich, wenn das vorgeschlagene Übertragungsschema nur dann verwendet wird, wenn die Dauer der Kanalübertragungsfunktion eine bestimmte Schranke überschreitet. Ansonsten kann das Standard konforme Verfahren verwendet werden, bei dem Burst mit einem Zusatzdatenblock bzw. einem Schutzintervall und einem direkt folgenden Nutzdatenblock in den Datenstrom eingefügt werden. Durch diese Anpassungsmöglichkeit wird der Verlust an Gesamtkapazität minimiert.

Vorteilhafterweise ist eine Übertragung auf verschiedenartigste Kommunikationssysteme möglich. Beispielsweise können H2-Systeme in Umgebungen mit sehr langen Mehrwege-Komponenten eingesetzt werden, beispielsweise in mobilen Umgebungen. Dabei kann bei H2 ausgenutzt werden, dass die relativ große Beabstandung der Unterträger (Carrier Spacing) von etwa 300kHz eine sehr große Dopplerspreizung (Doppler spread) ermöglicht, was sehr hohe Geschwindigkeiten der mobilen Terminals ermöglicht.

Dabei kann der Kapazitätsverlust aufgrund eines längeren Schutzintervalls minimiert werden. Bei einer Implementierung in den derzeitigen H2-Standard ist dies als eine optionale Lösung möglich, da die Länge des vorgeschlagenen neuen physikalischen Burst exakt dem zwei- oder mehrfachen der Länge des standardisierten physikalischen H2-Burst entspricht. Vorteilhafterweise wird für eine entsprechende neue Betriebsart bei mobilen Anwendungen eine nur relativ gering erhöhte Verarbeitungsleistung erforderlich.

Soweit Kapazitätsverluste auftreten, hängen diese von der gewählten Strategie und möglichen Implementationsverlusten ab. Beispielsweise kommt es zu einem höheren Kapazitätsverlust, wenn die Verlängerung des Zusatzdatenblocks bzw. Schutzintervalls mehr als zwei ursprüngliche Zusatzdatenblöcke umfasst.

Bei der Verwendung von zwei Fouriertransformationen FFT1 und FFT2 wird im Vergleich zu einem standardisierten H2-Empfänger bei vorgegebenen Zeitfenster keine zusätzliche Verarbeitungsleistung benötigt. Im Falle der Anwendung einer dritten Fouriertransformation FFT3 ist jedoch eine zusätzliche Verarbeitungsleistung zu berücksichtigen. Die Durchführung der Dritten Fouriertransformation FFT3 kann vorteilhafterweise zeitlich in den Bereich des nachfolgenden verlängerten Zusatzdatenblocks gelegt werden, so dass eine optimale Ausnutzung der Systemressourcen möglich wird. Senderseitig sind die erforderlichen Aufwendungen sogar geringer als bei einem standardisierten H2-Sender, da die Daten der zweiten Fouriertransformation FFT2 exakt die gleichen wie die Daten der ersten Fouriertransformation FFT1 sind und daher nur einmal zu berechnen sind.

Da die Datenproben der Schutzintervalle und der Fouriertransformationen FFT1, FFT2 exakt gleich sind, und zwar aufgrund der zyklischen Ausdehnung auf das Schutzintervall, ist es möglich, die Startzeit für die erste Fouriertransformation FFT1 frei um eine bekannte Zeitverschiebung anzusetzen. Dies ermöglicht eine Anpassung der Länge des Schutzintervalls auf die Länge der tatsächlichen Länge der Kanal-Impulsanwort. Durch eine solche Zeitverschiebung werden sich die Fouriertransformationen FFT1 und FFT2 teilweise überlappen, dies verursacht jedoch nur eine geringfügige Verschlechterung, da die Nutzdaten vollständig enthalten sind und lediglich bei der Mittelung der Rauschdaten ein nicht optimales Ergebnis zu verzeichnen ist. Die Phasendrehung (phase rotation) um die bekannte Zeitverschiebung der Unterträger kann leicht korrigiert werden.

Vorteilhafterweise wird die entsprechende Betriebsart, das heißt Standardbetrieb oder Übertragung kombinierter Datenblöcke, vom Sender zum Empfänger signalisiert, so dass der Empfänger darüber informiert wird, wie die empfangenen Daten zu verarbeiten sind. Möglich ist aber auch zusätzlich oder alternativ ein Verfahren zum Erkennen der für die empfangenen Daten erforderlichen Verarbeitung im Empfänger. Dazu kann empfängerseitig ein Vergleich jeweils zwei aufeinanderfolgend empfangener Bursts bzw. Datenblöcke über eine Zeit eines Zusatzdatenblocks G1 und eines Nutzdatenblocks D1 vorgenommen werden. Unter Berücksichtigung geringer Datenveränderungen durch Rauschen, das während der Übertragung über die Luftschnittstelle hinzugefügt wurde, kann bei gleichen Dateninhalten zweier aufeinanderfolgenden Datenblöcke auch automatisch auf die entsprechende Betriebsart mit verlängerten Datenblöcken geschlossen werden. Neben der Untersuchung empfangener Daten auf eine Abfolge von Nutzdatenblöcken mit gleichem Nutzdatengehalt ist auch eine Untersuchung dahingehend möglich, ob bei den empfangenen Daten eine verlängerte Zusatzdatenfolge bzw. ein verlängertes Schutzintervall ohne einen Datengehalt empfangen wurde.

## Patentansprüche

1. Verfahren zum Übertragen von Daten über eine Schnittstelle zwischen zwei Stationen (WH, AP) eines Kommunikationssystems (H2), bei dem
- die Daten (G1, D1, G2, D2) in einem Datenstrom übertragen werden und
- im Datenstrom Nutzdatenblöcke (D1, D2) hinter diese betreffenden Zusatzdatenblöcken (G1, G2) eingesetzt werden,
- dass im Datenstrom jeweils zumindest zwei Zusatzdatenblöcke (G1, G2) aufeinanderfolgend eingesetzt werden und anschließend die dazu gehörenden Nutzdatenblöcke (D1, D2) aufeinanderfolgend eingesetzt werden, **dadurch gekennzeichnet,**
- **dass** auf zwei verschiedene empfängerseitig empfangenen Datenblöcke zumindest eine Fouriertransformation angewandt wird, wobei in die Fouriertransformation (FFT3) Teile des ersten Datenblocks (D1) und Teile des zweiten Datenblocks (D2) eingehen.

2. Verfahren nach Anspruch 1, bei dem
- bei normalem Betrieb jeweils einer der Zusatzdatenblöcke (G1, G2), insbesondere Schutzintervalle, und anschließend der dazu gehörende der Nutzdatenblöcke (D1 bzw. D2) in den Datenstrom (G1, D1, G2, D2) eingesetzt werden und
- bei speziellen Betriebsanforderungen im Datenstrom jeweils aufeinanderfolgend zumindest zwei Zusatzdatenblöcke (G1, G2) eingesetzt werden, bevor die dazu gehörenden Nutzdatenblöcke (D1, D2) zusammenhängend im Datenstrom eingesetzt werden.

3. Verfahren nach Anspruch 2, bei dem
der Datenstrom empfängerseitig
- auf eine Abfolge von zwei oder mehr Zusatzdatenblöcken (G1, G2) vor einer entsprechenden Abfolge von Nutzdatenblöcken (D1, D2) oder
- auf aufeinanderfolgende Nutzdatenblöcke (D1, D2) mit gleichem Nutzdatengehalt untersucht wird
- und bei Erkennen eine entsprechende Verarbeitung eingeleitet wird.

4. Verfahren nach Anspruch 2 oder 3, bei dem
von der sendenden Station (AP; WH) zu der empfangenden Station (WH; AP) die verwendete Übertragungsabfolge: signalisiert wird.

5. Verfahren nach einem der Ansprüche 2 - 4, bei dem
als spezielle Betriebsanforderungen eine überlange Antwortzeit und/oder längere Datenfolgen mit der Länge von mehr als einem der Zusatzdatenblöcke und/oder Nutzdatenblöcke (D1, D2) und/oder eine höhere Übertragungssicherheit erkannt werden.

6. Verfahren nach einem der vorgenannten Ansprüche, bei dem die Fouriertransformation (FFT3) hälftig über die zweite Hälfte des ersten Datenblocks (D1) und hälftig über die erste Hälfte des zweiten Datenblocks (D2) angewendet wird.

7. Verfahren nach einem der vorgenannten Ansprüche, bei dem im Falle mehrerer Fouriertransformationen (FFT1, FFT2, FFT3) über Datenblöcke (D1, D2) mit gleicher Datenfolge die Ergebnisse der Fouriertransformationen (FFT1, FFT2, FFT3) zur Fehlerminimierung addiert und optional durch die Anzahl der Ergebnisse dividiert werden.

8. Verfahren nach einem der vorgenannten Ansprüche, bei dem die Fouriertransformationen (FFT1, FFT2, FFT3) jeweils nur auf die Länge eines Nutzdatenblocks (D1, D2,) angewendet werden.

9. Vorrichtungen für ein Kommunikationssystem (H2) mit einer Schnittstelle (V) zwischen zwei Stationen (WH, AP) zum Übertragen von Daten zwischen diesen,
- wobei die Vorrichtung eine Steuereinrichtung (C) und eine Speichereinrichtung (S) zum Übertragen der Daten (G1, D1, G2, D2) in einen Datenstrom und zum Einsetzen von Nutzdatenblöcken (D1, D2) hinter diese betreffende Zusatzdatenblöcke (G1, G2) in den Datenstrom aufweist,
**dadurch gekennzeichnet,**
- **dass** empfangene Nutzdatenblöcke (D1) in der Speichereinrichtung (S) zum späteren Verarbeiten mit nachfolgend empfangenen Nutzdatenblöcken (D2) gemäß einem Verfahren nach einem der vorstehenden Ansprüche zwischengespeichert und in der Steuereinrichtung (C) entsprechend verarbeitet werden.

## Claims

1. Method for transmitting data via an interface between two stations (WH, AP) of a communications system (H2), in which
- the data (G1, D1, G2, D2) are transmitted in a data stream and
- in the data stream, user data blocks (D1, D2) are inserted behind supplementary data blocks (G1, G2) relating to the former,
- in the data stream, in each case at least two supplementary data blocks (G1, G2) are inserted successively and, following these, the associated user data blocks (D1, D2) are successively inserted,
**characterized in that** at least one Fourier transform is applied to two different data blocks received at the receiver end, parts of the first data block (D1) and parts of the second data block (D2) being included in the Fourier transform (FFT3).

2. Method according to Claim 1, in which
- in normal operation, in each case one of the supplementary data blocks (G1, G2), particularly guard intervals, and then the associated one of the user data blocks (D1 or D2 respectively) are inserted in the data stream (G1, D1, G2, D2), and
- in the case of special operating requirements in each case successively at least two supplementary data blocks (G1, G2) are inserted in the data stream before the associated user data blocks (D1, D2) are contiguously inserted in the data stream.

3. Method according to Claim 2, in which the data stream is examined at the receiver end
- for a sequence of two or more supplementary data blocks (G1, G2) before a corresponding sequence of user data blocks (D1, D2), or
- for successive user data blocks (D1, D2) having the same user data content,
- and a corresponding processing is initiated on detection.

4. Method according to Claim 2 or 3, in which the transmission sequence used is signaled from the transmitting station (AP; WH) to the receiving station (WH; AP).

5. Method according to one of Claims 2-4, in which an excessively long response time and/or longer data sequences having the length of more than one of the supplementary data blocks and/or user data blocks (D1, D2) and/or a higher transmission reliability are recognized as special operating requirements.

6. Method according to one of the aforementioned claims, in which one half of the Fourier transform (FFT3) is applied over the second half of the first data block (D1) and one half is applied over the first half of the second data block (D2).

7. Method according to one of the aforementioned claims, in which, in the case of a number of Fourier transforms (FFT1, FFT2, FFT3) over data blocks (D1, D2) having the same data sequence, the results of the Fourier transforms (FFT1, FFT2, FFT3) are added for error minimization and are optionally divided by the number of results.

8. Method according to one of the aforementioned claims, in which the Fourier transforms (FFT1, FFT2, FFT3) are in each case only applied to the length of one user data block (D1, D2).

9. Device for a communications system (H2) having an interface (V) between two stations (WH, AP) for transmitting data between these,
- in which the device exhibits a controller (C) and a storage facility (S) for transmitting the data (G1, D1, G2, D2) in a data stream and for inserting user data blocks (D1, D2) into the data stream behind supplementary data blocks (G1, G2) relating to the former,
**characterized in that**
- received user data blocks (D1) are temporarily stored in the storage facility (S) for later processing with subsequently received user data blocks (D2) according to a method according to one of the preceding claims and are correspondingly processed in the controller C.

## Revendications

1. Procédé pour la transmission de données sur une interface entre deux stations (WH, AP) d'un système de communication (H2), dans lequel
- les données (G1, D1, G2, D2) sont transmises dans un flux de données et
- des blocs de données utiles (D1, D2) sont insérés dans le flux de données derrière des blocs de données supplémentaires (G1, G2) les concernant,
- au moins deux blocs de données supplémentaires (G1, G2) à chaque fois sont insérés consécutivement dans le flux de données et les blocs de données utiles correspondants (D1, D2) sont insérés ensuite consécutivement,
**caractérisé en ce**
- **qu'**au moins une transformation de Fourier est appliquée sur deux blocs de données différents reçus côté récepteur, des parties du premier bloc de données (D1) et des parties du deuxième bloc de données (D2) intervenant dans la transformation de Fourier (FFT3).

2. Procédé selon la revendication 1, dans lequel
- lors du fonctionnement normal, un des blocs de données supplémentaires (G1, G2), notamment des intervalles de protection, est à chaque fois inséré dans le flux de données (G1, D1, G2, D2), suivi de celui des blocs de données utiles (D1 resp. D2) qui correspond et
- en présence d'exigences de fonctionnement particulières, au moins deux blocs de données supplémentaires (G1, G2) sont à chaque fois insérés consécutivement dans le flux de données avant que les blocs de données utiles correspondants (D1, D2) soient insérés d'une traite dans le flux de données.

3. Procédé selon la revendication 2, dans lequel
le flux de données est analysé, côté récepteur, pour reconnaître
- une séquence de deux ou plus de deux blocs de données supplémentaires (G1, G2) précédant une séquence correspondante de blocs de données utiles (D1, D2) ou
- des blocs de données utiles consécutifs (D1, D2) ayant un contenu de données utiles identique
- et un traitement correspondant est initié en cas de reconnaissance.

4. Procédé selon la revendication 2 ou 3, dans lequel
la séquence de transmission utilisée est signalée de la station émettrice (AP; WH) vers la station réceptrice (WH; AP).

5. Procédé selon l'une des revendications 2 - 4, dans lequel on reconnaît, en tant qu'exigences de fonctionnement particulières, un temps de réponse trop long et/ou des séquences de données relativement longues dont la longueur dépasse un des blocs de données supplémentaires et/ou blocs de données utiles (D1, D2) et/ou une sécurité de transmission plus élevée.

6. Procédé selon l'une des revendications précédentes, dans lequel la transformation de Fourier (FFT3) est appliquée pour moitié sur la seconde moitié du premier bloc de données (D1) et pour moitié sur la première moitié du deuxième bloc de données (D2).

7. Procédé selon l'une des revendications précédentes, dans lequel, dans le cas de plusieurs transformations de Fourier (FFT1, FFT2, FFT3) sur des blocs de données (D1, D2) présentant une séquence de données identique, les résultats des transformations de Fourier (FFT1, FFT2, FFT3) sont additionnés pour minimiser les erreurs et sont, facultativement, divisés par le nombre des résultats.

8. Procédé selon l'une des revendications précédentes, dans lequel les transformations de Fourier (FFT1, FFT2, FFT3) ne sont appliquées, à chaque fois, que sur la longueur d'un bloc de données utiles (D1, D2).

9. Dispositif pour un système de communication (H2) comprenant une interface (V) entre deux stations (WH, AP) pour la transmission de données entre celles-ci,
- le dispositif comprenant un dispositif de commande (C) et un dispositif d'enregistrement (S) pour la transmission des données (G1, D1, G2, D2) dans un flux de données et pour l'insertion de blocs de données utiles (D1, D2) derrière des blocs de données supplémentaires (G1, G2) les concernant dans le flux de données,
**caractérisé en ce que**
- des blocs de données utiles (D1) reçus sont temporairement mis en mémoire dans le dispositif d'enregistrement (S) en vue d'un traitement ultérieur avec des blocs de données utiles (D2) reçus par la suite selon un procédé selon l'une des revendications précédentes et sont traités en conséquence dans le dispositif de commande (C).
